# EUROPEAN PATENT APPLICATION

(11) **EP 4 258 562 A1**
(43) Date of publication of application: **11.10.2023**
(21) Application number: 21905333.7
(22) Date of filing: 01.11.2021
(51) Int. Cl.: H04B 1/40, H04B 7/04

(54) **RADIO FREQUENCY TRANSCEIVING SYSTEM AND COMMUNICATION DEVICE**

(30) Priority: 16.12.2020 CN 202011487433
(71) Applicant: GUANGDONG OPPO MOBILE TELECOMMUNICATIONS CORP., LTD., Dongguan, Guangdong 523860 (CN)
(72) Inventor: WANG, Guolong, Dongguan, Guangdong 523860 (CN)
(74) Representative: Mewburn Ellis LLP
(86) International application number: PCT/CN2021/127825
(87) International publication number: WO 2022/127404

(57) **Abstract**

A radio frequency (RF) transceiving system is provided. The RF transceiving system includes an RF transceiver (10), an antenna group, three RF low-noise-amplifier (LNA)-front-end-module (LFEM) devices (20), and a transmission/reception selection module (30). The antenna group includes at least a first antenna (Ant1), a second antenna (Ant2), a third antenna (Ant3), and a fourth antenna (Ant4). Each RF LFEM device (20) is provided with a first transmit/receive port (TRX1), a second transmit/receive port (TRX2), at least one antenna port (ANT), and a first receive port (RX1), a second receive port (RX2), and a third receive port (RX3) which are connected with the RF transceiver. Antenna ports (ANT) of the three RF LFEM devices (20) are respectively connected with the first antenna (Ant1), the second antenna (Ant2), and the third antenna (Ant3). The transmission/reception selection module (30) is respectively connected with the first transmit/receive port (TRX1) and the second transmit/receive port (TRX2) of each RF LFEM device (20), and is connected with the first antenna (Ant1), the second antenna (Ant2), and the third antenna (Ant3) via each RF LFEM device (20). The transmission/reception selection module (30) is further connected with the RF transceiver (10) and the fourth antenna (Ant4).

## Description

### CROSS-REFERENCE TO RELATED APPLICATION(S)

This application claims priority to and the benefit of Chinese Patent Application No. 2020114874336, filed December 16, 2020 with the China National Intellectual Property Administration, and entitled "RF TRANSCEIVING SYSTEM AND COMMUNICATION DEVICE", the entire disclosure of which is hereby incorporated by reference.

### TECHNICAL FIELD

This disclosure relates to the field of radio frequency (RF) technology, particularly to a radio frequency (RF) transceiving system and a communication device.

### BACKGROUND

Only background information related to the disclosure is provided, which do not necessarily constitute existing exemplary technology.

With the development and progress of technology, 5^{th}-generation mobile communication technology (5G) is gradually applied to electronic devices. A communication frequency of 5G is higher than a communication frequency of 4^{th}-generation mobile communication technology (4G). Generally, multiple radio frequency (RF) front-end modules are disposed in a receive channel of an RF system to cooperate with an antenna array to increase a channel capacity of the RF system, which is costly and occupies a large area of a substrate.

### SUMMARY

A radio frequency (RF) transceiving system and a communication device are provided according to implementations of the disclosure.

The RF transceiving system includes an RF transceiver, an antenna group, three RF low-noise-amplifier (LNA)-front-end-module (LFEM) devices, and a transmission/reception selection module. The antenna group includes at least a first antenna, a second antenna, a third antenna, and a fourth antenna, and configured for RF signal transmission/reception. Each RF LFEM device is provided with a first transmit/receive port, a second transmit/receive port, at least one antenna port, and a first receive port, a second receive port, and a third receive port which are connected with the RF transceiver, and the three RF LFEM devices are configured to transmit/receive an RF signal in a first frequency band, an RF signal in a second frequency band, and an RF signal in a third frequency band. Antenna ports of the three RF LFEM devices are respectively connected with the first antenna, the second antenna, and the third antenna. The transmission/reception selection module is respectively connected with the first transmit/receive port and the second transmit/receive port of each RF LFEM device, and is respectively connected with the first antenna, the second antenna, and the third antenna via each RF LFEM device. The transmission/reception selection module is further connected with the RF transceiver and the fourth antenna. The transmission/reception selection module is configured for transmission/reception selection of the RF signal in the first frequency band, the RF signal in the second frequency band, and the RF signal in the third frequency band.

The communication device includes the RF transceiving system mentioned above.

One or more implementations of the disclosure are elaborated in accompanying drawings and illustrations below. Other features, purposes, and advantages of the disclosure are illustrated clearly according to the description, the accompanying drawings, and the claims

### BRIEF DESCRIPTION OF THE DRAWINGS

To describe technical solutions in implementations of the disclosure or the related art more clearly, the following will give a brief introduction to accompanying drawings required for describing implementations or the related art. Apparently, the accompanying drawings described hereinafter are merely some implementations of the disclosure. Based on these drawings, those of ordinary skill in the art can also obtain other drawings without creative effort.
FIG. 1a is a schematic diagram of a first transmission application scenario of channel-information feedback of a communication device provided in an implementation.
FIG. 1b is a schematic diagram of a second transmission application scenario of channel-information feedback of a communication device provided in an implementation.
FIG. 2 is a schematic mode diagram illustrating sounding reference signal (SRS) antenna switching in an implementation.
FIG. 3 is a schematic structural diagram of a first radio frequency (RF) transceiving system in an implementation.
FIG. 4 is a schematic structural diagram of a first RF LNA-front-end module (LFEM) device in an implementation.
FIG. 5 is a schematic structural diagram of a second RF transceiving system in an implementation.
FIG. 6 is a schematic structural diagram of a second RF LFEM device in an implementation.
FIG. 7 is a schematic structural diagram of a third RF transceiving system in an implementation.
FIG. 8a is a schematic structural diagram of a third RF LFEM device in an implementation.
FIG. 8b is a schematic structural diagram of a fourth RF LFEM device in an implementation.
FIG. 9a is a schematic diagram of package pins of the RF LFEM device in FIG. 4 and FIG. 8b.
FIG. 9b is a schematic diagram of package pins of the RF LFEM device in FIG. 6 and FIG. 8a.

### DETAILED DESCRIPTION

In order to facilitate the understanding of the disclosure and to make features and advantages of the disclosure apparent and easy to be understood, implementations of the disclosure are elaborated below with reference to accompanying drawings. In the following illustration, many specific details are described to facilitate complete understanding of the disclosure, and preferred implementations of the disclosure are illustrated in the drawings. However, the disclosure can be implemented in many different forms and is not limited to implementations described herein. On the contrary, the purpose of providing these implementations is to enable the disclosure to be understood more thorough and comprehensive. The disclosure can be implemented in many ways other than those described herein, and those skilled in the art can make similar improvements without violating connotations of the disclosure, so that the disclosure is not limited by specific implementations disclosed below.

Furthermore, terms "first" and "second", and the like are used for descriptive purposes only, and should not be understood as indicating or implying relative importance or implicitly indicating the number of technical features referred to herein. Therefore, features limited by "first" and "second", and the like can explicitly or implicitly include at least one such feature. In the illustration of the disclosure, "multiple" or "a plurality of" refers to "at least two", such as two, three, etc., unless otherwise explicitly specified. In the illustration of the disclosure, "several" refers to "at least one", such as one, two, etc., unless otherwise explicitly specified.

A radio frequency (RF) transceiving system related in implementations of the disclosure can be applied to a communication device with wireless communication functions. The communication device may be handheld devices, in-vehicle devices, wearable devices, computing devices or other processing devices connected with wireless modems, and various forms of user equipment (UE) (e.g., mobile phones), mobile stations (MS), etc. For convenience of illustration, the above-mentioned devices are collectively referred to as the communication device. A network device may include a base station, an access point (AP), or the like.

The RF transceiving system in implementations of the disclosure can support the 5^{th}-generation mobile communication technology (short for 5G or 5G technology). 5G is the latest generation of cellular mobile communication technology, and is also an extension of 4G, 3G, and 2G systems. Performance goals of 5G are high data rates, reduced latency, energy savings, reduced costs, increased system capacity, and large-scale device connectivity. 5G has two modes, which are standalone access (NA) mode and non-standalone access (NSA) mode. In the NSA mode, 5G control signaling is anchored to 4G base stations, while in the SA MODE, 5G base stations are directly connected to the 5G core network, and the control signaling does not depend on the 4G network.

5G networks support beamforming technology, which allows for directional transmission to communication devices. To transmit directionally, the base station needs to first detect a position of a communication device and a quality of a transmission path, etc., such that the base station can allocate resources more accurately to each communication device.

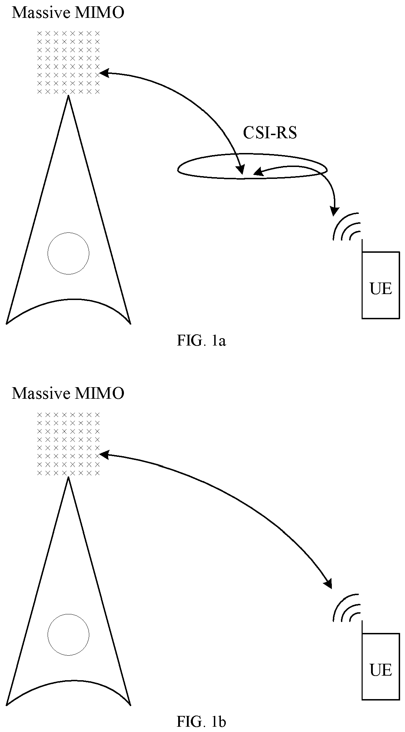

Currently, there are two different modes of channel information feedback of communication devices, i.e., precoding matrix indicator (PMI) mode and sounding reference signal (SRS) mode, with signal transmission processes illustrated in FIGs. 1a and 1b. As defined by the standard, PMI is a function that all 5G communication devices need to support, while SRS is an optional function. In the PMI mode, after measurements of a terminal, the terminal estimates channel information and resource requirements in combination with various quantization algorithms, and reports a result to a base station, and the base station analyses the result based on a pre-set mechanism. In the SRS mode, the terminal is allowed to report the channel information directly to the base station based on channel reciprocity, which is more accurate.

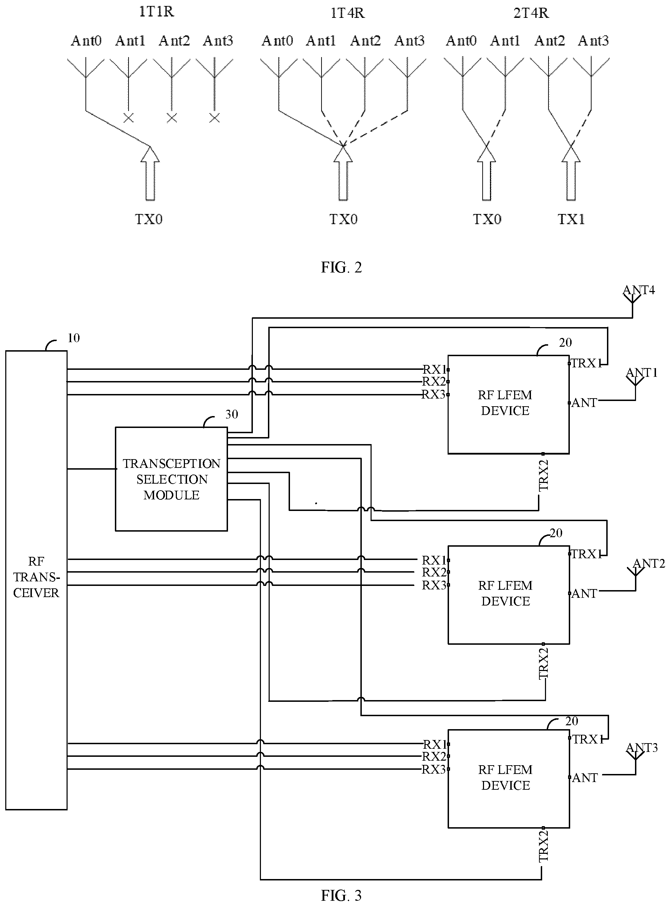

Communication devices transmit SRS information to enable base stations to detect terminal positions and channel quality. SRS antenna switching is illustrated in FIG. 2, and elaborated as follows.

First, 1T1R: report information to a base station fixedly through a first antenna, and SRS in-turn transmitting is not supported.

Second, 1T4R: a first antenna to a fourth antenna transmit SRS information in turn, and only one antenna is selected for transmission each time. Currently, this mode is used in NSA.

Third, 2T4R: the first antenna to the fourth antenna transmit SRS information in turn, and two antennas are selected for transmission simultaneously each time. Currently, this mode is used in SA.

In the SRS mode, the more antennas that participate in transmitting reference signals, the more accurate the channel estimation, and the higher the achievable rate. With the same number of antennas, channel estimation can be completed faster in the SA mode than that in the NSA mode, thus improving network channel estimation speed.

An RF transceiving system is provided in implementations of the disclosure. As illustrated in FIG. 3, in an implementation, the RF transceiving system includes an RF transceiver 10, an antenna group, three RF low noise amplifier (LNA)-front-end module (LFEM) device 20, a transmission/reception selection module 30.

Exemplarily, the RF transceiver 10 may include a transmitter (e.g., transmitter TX) and a receiver (e.g., receiver RX), or may include only the receiver (e.g., receiver RX) or only the transmitter (e.g., transmitter TX). The RF transceiver 10 can be used to implement frequency conversion between RF signals and baseband signals, or/and to implement frequency conversion between signals in different frequency bands, etc.

The antenna group includes at least a first antenna Ant1, a second antenna Ant2, a third antenna Ant3, and a fourth antenna Ant4. The first antenna Ant1, the second antenna Ant2, the third antenna Ant3, and the fourth antenna Ant4 can be used to receive and transmit RF signals in frequency bands N41, N77, and N79. That is, the first antenna Ant1, the second antenna Ant2, the third antenna Ant3, and the fourth antenna Ant4 all can support 5G new radio (NR) signals. In an implementation, each of the antennas in the antenna group may be a directional antenna or a non-directional antenna. Exemplarily, each of the antennas in the antenna group may be formed by any appropriate type of antenna. For example, each of the antennas in the antenna group may include antennas with resonating elements formed by at least one of the following antenna structures: array antenna, loop antenna, patch antenna, slot antenna, helical antenna, strip antenna, monopole antenna, or dipole antenna, etc. Different types of antennas can be used for combinations of different frequency bands of RF signals.

In implementations of the present disclosure, the RF LFEM device 20 is understood as a low noise amplifier-front-end module, which is configured for dual-channel reception of RF signals in at least two frequency bands, and can support 4*4 multiple input multiple output (MIMO) function in cooperation with the first antenna Ant1, the second antenna Ant2, the third antenna Ant3, the fourth antenna Ant4, and the transmission/reception selection module 30. The RF LFEM device 20 is provided with at least one antenna port ANT, a first transmit/receive port TRX1, a second transmit/receive port TRX2, and multiple first receive ports RX1, a second receive port RX2, and a third receive port RX3 configured to connect the RF transceiver 10.

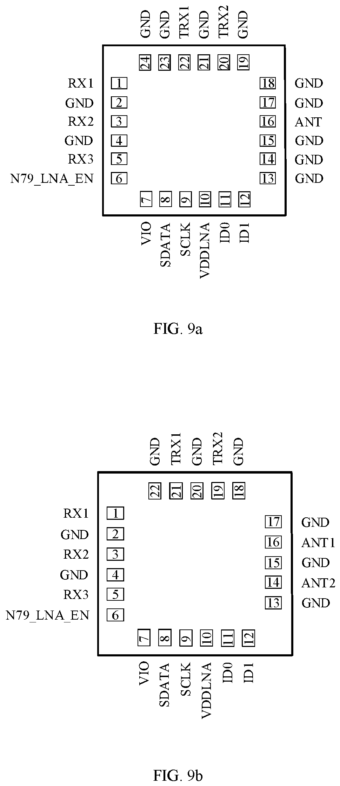

As illustrated in FIG. 9a, in one implementation, the RF LFEM device 20 may be understood as a packaged chip, and the at least one antenna port ANT, the first transmit/receive port TRX1, the second transmit/receive port TRX2, the first receive port RX1, the second receive port RX2, and the third receive port RX3 that are configured in the RF LFEM device may be understood as RF pin terminals of the RF LFEM device 20 and are configured to connect external devices. Exemplarily, the three RF LFEM devices 20 are a first RF LFEM device 20, a second RF LFEM device 20, and a third RF LFEM device 20 respectively. An RF signal received by the first antenna Ant1 may be input to the first RF LFEM device 20 via an antenna port of the first RF LFEM device 20, and an RF signal processed by the first RF LFEM device 20 may be transmitted out through the first antenna Ant1. An RF signal received by the second antenna Ant2 may be input to the second RF LFEM device 20 via an antenna port of the second RF LFEM device 20, and an RF signal processed by the second RF LFEM device 20 may be transmitted out through the second antenna Ant2. An RF signal received by the third antenna Ant3 may be input to the third RF LFEM device 20 via an antenna port of the third RF LFEM device 20, and an RF signal processed by the third RF LFEM device 20 may be transmitted out through the third antenna Ant3. For each RF LFEM device 20, the RF LFEM device 20 can process an RF signal received by the RF LFEM device 20 via the antenna port ANT and then output a processed RF signal to the RF transceiver 10 through the first receive port RX1 so as to realize reception control of the RF signal. For each RF LFEM device 20, the RF LFEM device 20 can process the RF signal received by the RF LFEM device 20 via the antenna port ANT and then output the processed RF signal to the RF transceiver 10 through the second receive port RX2 so as to realize reception control of the RF signal. For each RF LFEM device 20, the RF LFEM device 20 can process the RF signal received by the RF LFEM device 20 via the antenna port ANT and then output the processed RF signal to the RF transceiver 10 through the third receive port RX3 so as to realize reception control of the RF signal. An RF signal that is output by the RF transceiver 10 and processed by the transmission/reception selection module 30 may be received by the first transmit/receive port TRX1, so that the RF LFEM device 20 can realize transmission of the received RF signal, and the RF signal that is output by the RF transceiver 10 and processed by the transmission/reception selection module 30 may be received by the second transmit/receive port TRX2, so that the RF LFEM device 20 can realize transmission of the received RF signal.

An RF signal may be a 5G signal, such as a 5G signal in N41, an RF signal in N77 (N78), an RF signal in N79, etc. Specifically, N41 has a working frequency band of 496MHz-2690MHz, N77 has a working frequency band of 3.3GHz-4.2GHz, N78 has a working frequency band of 3.3GHz-3.8GHz, and N79 has a working frequency band of 4.4GHz-5.0GHz. It should be noted that the working frequency band of N77 covers the working frequency band of N78. That is, when the RF LFEM device 2030 can support transmission/reception of RF signals in N77, the RF LFEM device 30 can also support transmission/reception of RF signals in N78. In one implementation, the RF signal in the first frequency band is a 5G signal in frequency band N41, and the RF signal in the second frequency band and the RF signal in the third frequency band are respectively a 5G signal in frequency band N77 and a 5G signal in frequency band N79.

The transmission/reception selection module 30 is respectively connected with the RF transceiver 10 and the fourth antenna. The transmission/reception selection module 30 is also connected with the first transmit/receive port TRX1 and the second transmit/receive port TRX2 of each RF LFEM device, so as to be respectively connected with the first antenna Ant1, the second antenna Ant2, or the third antenna Ant3 through each RF LFEM device. The transmission/reception selection module 30 can transmit the RF signal in the first frequency band, the RF signal in the second frequency band, and the RF signal in the third frequency band output by the RF transceiver 10 through any antenna in the antenna group, or receive the RF signal in the first frequency band, the RF signal in the second frequency band, or the RF signal in the third frequency band received by any antenna in the antenna group and transmit the same to the RF transceiver 10, so that the RF transceiving system can realize 4*4MIMO function for RF signals in three frequency bands. Specifically, the transmission/reception selection module 30 can directly transmit the RF signal in the third frequency band output by the RF transceiver 10 to any antenna for transmission, and can also transmit the RF signal in the third frequency band to any antenna through the RF LFEM device 20.

MIMO technology refers to that multiple transmit antennas and receive antennas are used respectively on a transmit port and a receive port, to fully utilize spatial resources. Multi-transmit and multi-receive is realized through multiple antennas, such that a system channel capacity can be significantly enhanced without increasing spectrum resources and an antenna transmission power. MIMO technology shows obvious advantages, thereby being regarded as core technology for next-generation mobile communication.

Terminals and base stations can form 2*2 MIMO or 4*4 MIMO. When reception performance is tested according to TTL protocol, four receive channels are all connected with an instrument. The four channels form MIMO downlinks, and all of the four channels receive signals transmitted by an uplink base station, thereby improving performance of a receiver.

The above RF transceiving system can achieve reception of RF signals in three frequency bands through the RF LFEM device20. Receive channels for RF signals in three frequency bands are integrated and packaged into the same chip, such that a substrate area occupied by each device can be saved, physical space can be freed up for performance optimization of other modules, and costs are reduced. The RF LFEM device 20 can realize 4*4 MIMO function in 1T4R mode in cooperation with the transmission/reception selection module 30, the first antenna, the second antenna, the third antenna, and the fourth antenna, thereby enhancing the system channel capacity and improving the accuracy and efficiency of channel estimation.

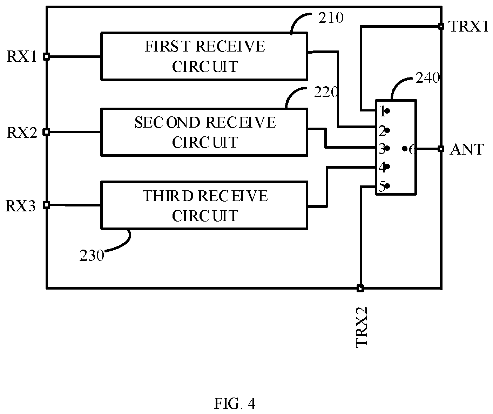

As illustrated in FIG. 4, in one implementation, the RF LFEM device 20 comprises a first receive circuit 210, a second receive circuit 220, a third receive circuit 230, and a first switch circuit 240. The first switch circuit 240 includes multiple first ends and at least one second end. The multiple first ends of the first switch circuit 240 are connected with an input end of the first receive circuit 210, an input end of the second receive circuit 220, an input end of the third receive circuit 230, the first transmit/receive port TRX1, and the second transmit/receive port TRX2 in one-to-one correspondence. The at least one second end of the first switch circuit 240 is connected with the antenna port ANT. The RF LFEM device 20 is configured for RF signal tranception via the antenna port ANT, and further configured to transmit, through the first transmit/receive port TRX1 and/or the second transmit/receive port TRX2, an RF signal output by the RF transceiver 10, to selectively conduct a connection between the antenna port ANT and any receive channel of the RF LFEM device 20, or to selectively conduct a connection between the antenna port ANT and any transmit channel of the RF LFEM device 20. A receive channel of the RF LFEM device 20 may be understood as a receive channel between the antenna port ANT and any of the first receive port RX1, the second receive port RX2, the third receive port RX3, the first transmit/receive port TRX1, or the second transmit/receive port TRX2. A transmit channel of the RF LFEM device 20 may be understood as a transmit channel between the antenna port ANT and the first transmit/receive port TRX1 or the second transmit/receive port TRX2.

An output end of the first receive circuit 210 is connected with the first receive port RX1, and is configured to receive and amplify the RF signal in the first frequency band. An output end of the second receive circuit 220 is connected with the second receive port RX2, and is configured to receive and amplify the RF signal in the second frequency band. An output end of the third receive circuit 230 is connected with the third receive port RX3, and is configured to receive and amplify the RF signal in the third frequency band. Exemplarily, if the first antenna Ant1 receives the RF signal in the first frequency band, the RF signal can be input to the first switch circuit 240 through the antenna port ANT of the first RF LFEM device 20 connected with the first antenna Ant1, the first switch circuit 240 is switched to conduct the first receive circuit 210, and after being amplified by the first receive circuit 210, the RF signal is output to the RF transceiver 10 through the first receive port RX1. If the first antenna Ant1 receives the RF signal in the second frequency band, the RF signal can be input to the first switch circuit 240 through the antenna port ANT of the first RF LFEM device 20 connected with the first antenna Ant1, the first switch circuit 240 is switched to conduct the second receive circuit 220, and after being amplified by the second receive circuit 220, the RF signal is output to the RF transceiver 10 through the second receive port RX2. If the first antenna Ant1 receives the RF signal in the third frequency band, the RF signal can be input to the first switch circuit 240 through the antenna port ANT of the first RF LFEM device 20 connected with the first antenna Ant1, the first switch circuit 240 is switched to conduct the third receive circuit 230, and after being amplified by the third receive circuit 230, the RF signal is output to the RF transceiver 10 through the third receive port RX3. If the second antenna Ant2 receives the RF signal in the first frequency band, the RF signal can be input to the first switch circuit 240 through the antenna port ANT of the second RF LFEM device 20 connected with the second antenna Ant2, the first switch circuit 240 is switched to conduct the first receive circuit 210, and after being amplified by the first receive circuit 210, the RF signal is output to the RF transceiver 10 through the first receive port RX1. If the second antenna Ant2 receives the RF signal in the second frequency band, the RF signal can be input to the first switch circuit 240 through the antenna port ANT of the second RF LFEM device 20 connected with the second antenna Ant2, the first switch circuit 240 is switched to conduct the second receive circuit 220, and after being amplified by the second receive circuit 220, the RF signal is output to the RF transceiver 10 through the second receive port RX2. If the second antenna Ant2 receives the RF signal in the third frequency band, the RF signal can be input to the first switch circuit 240 through the antenna port ANT of the second RF LFEM device 20 connected with the second antenna Ant2, the first switch circuit 240 is switched to conduct the third receive circuit 230, and after being amplified by the third receive circuit 230, the RF signal is output to the RF transceiver 10 through the third receive port RX3. If the third antenna Ant3 receives the RF signal in the first frequency band, the RF signal can be input to the first switch circuit 240 through the antenna port ANT of the third RF LFEM device 20 connected with the third antenna Ant3, the first switch circuit 240 is switched to conduct the first receive circuit 210, and after being amplified by the first receive circuit 210, the RF signal is output to the RF transceiver 10 through the first receive port RX1. If the third antenna Ant3 receives the RF signal in the second frequency band, the RF signal can be input to the first switch circuit 240 through the antenna port ANT of the second RF LFEM device 20 connected with the third antenna Ant3, the first switch circuit 240 is switched to conduct the second receive circuit 220, and after being amplified by the second receive circuit 220, the RF signal is output to the RF transceiver 10 through the second receive port RX2. If the third antenna Ant3 receives the RF signal in the third frequency band, the RF signal can be input to the first switch circuit 240 through the antenna port ANT of the third RF LFEM device 20 connected with the third antenna Ant3, the first switch circuit 240 is switched to conduct the third receive circuit 230, and after being amplified by the third receive circuit 230, the RF signal is output to the RF transceiver 10 through the third receive port RX3.

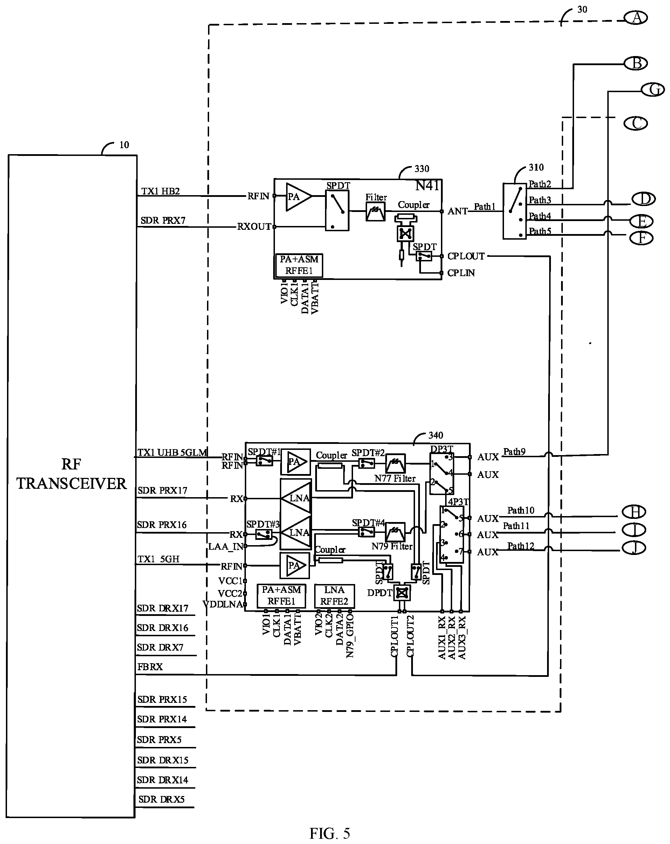

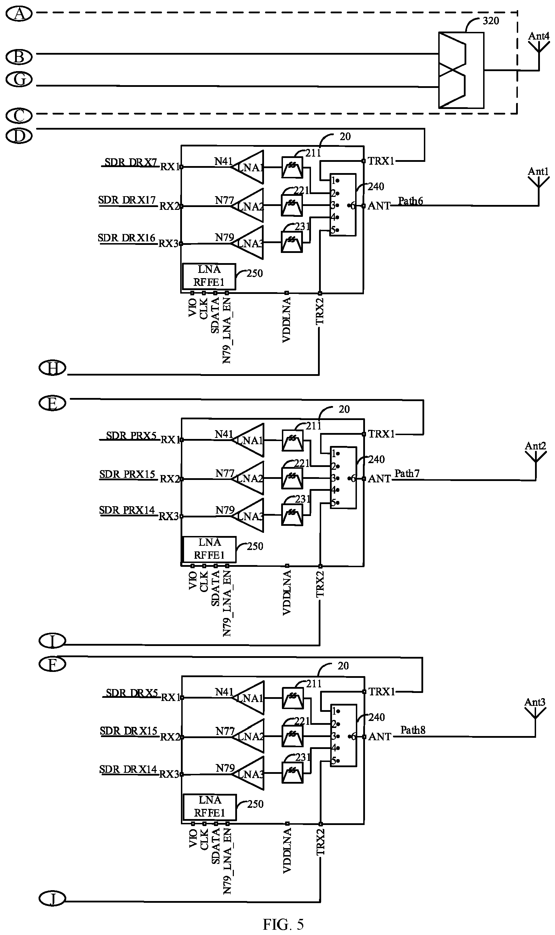

As illustrated in FIG. 5, in one implementation, the first receive circuit 210 includes a first LNA LNA1, an input end of the first LNA LNA1 is connected with one first end of the first switch circuit 240, and an output end of the first LNA LNA1 is connected with the first receive port RX1. The first LNA LNA1 is configured to amplify the received RF signal in the first frequency band.

The second receive circuit 220 includes a second LNA LNA2, an input end of the second LNA LNA2 is connected with another first end of the first switch circuit 240, and an output end of the second LNA LNA2 is connected with the second receive port RX2. The second LNA LNA 2 is configured to amplify the received RF signal in the second frequency band.

The third receive circuit 230 includes a third LNA LNA3, an input end of the third LNA LNA3 is connected with yet another first end of the first switch circuit 240, and an output end of the third LNA LNA3 is connected with the third receive port RX3. The third LNA LNA3 is configured to amplify the received RF signal in the third frequency band.

As illustrated in FIG. 5, in one implementation, the first receive circuit 210 further includes a first filter unit 211, the second receive circuit 220 further includes a second filter unit 221, and the third receive circuit 230 further includes a third filter unit 231. The first filter unit 211 is disposed in a receive channel for the RF signal in the first frequency band, and is configured to filter the received RF signal in the first frequency band and output the filtered RF signal in the first frequency band to the first LNA LNA1. The first filter unit 211 is disposed at the front end of the first switch circuit 240, that is, the first filter unit 211 is disposed between the input end of the first LNA LNA1 and the first switch circuit 240. The second filter unit 221 is disposed in a receive channel for the RF signal in the second frequency band, and is configured to filter the received RF signal in the second frequency band and output the filtered RF signal in the second frequency band to the second LNA LNA2. The second filter unit 221 is disposed at the front end of the first switch circuit 240, that is, the second filter unit 221 is disposed between the input end of the second LNA LNA2 and the first switch circuit 240. The third filter unit 231 is disposed in a receive channel for the RF signal in the third frequency band, and is configured to filter the received RF signal in the third frequency band and output the filtered signal to the third LNA LNA3. The third filter unit 231 is disposed at the front end of the first switch circuit 240, that is, the third filter unit 231 is disposed between the input end of the third LNA LNA3 and the first switch circuit 240.

As illustrated in FIG. 5, in one implementation, the three RF LFEM devices 20 each is provided with one antenna port, the antenna port ANT of one RF LFEM device 20 is connected with the first antenna Ant1, the antenna port ANT of another RF LFEM device 20 is connected with the second antenna Ant2, and the antenna port ANT of yet another RF LFEM device 20 is connected with the third antenna Ant3.

As illustrated in FIG. 5, in one implementation, the transmission/reception selection module30 includes a second switch circuit 310, a second combiner 320, a first RF power amplifier module including duplexers (PA Mid) device 330, and a second RF PA Mid device 340. The first RF PA Mid device 330 is provided with one RF antenna port AUX, and the second RF PA Mid device 340 is provided with four RF antenna ports AUX. The second switch circuit 310 includes a first end and four second ends. The first end of the second switch circuit 310 is connected with the RF antenna port AUX of the first RF PA Mid device 330, four first ports of the second switch circuit 310 are connected with the first transmit/receive ports TRX1 of the three RF LFEM devices 20 and the second combiner 320 in one-to-one correspondence. One second end of the second switch circuit 310 and one RF antenna port AUX of the second RF PA Mid device 340 are connected with the fourth antenna Ant4 through the second combiner 320. The second switch circuit 310 is configured to selectively connect RF channels between the first RF PA Mid device 330 and any of the first antenna Ant1, the second antenna Ant2, the third antenna Ant3, or the fourth antenna Ant4. The first RF PA Mid device 330 is further configured to connect the RF transceiver 10, and is configured to transmit/receive the RF signal in the first frequency band. The other three RF antenna ports AUX of the second RF PA Mid device 340 are connected with second transmit/receive ports TRX2 of the three RF LFEM devices 20 in one-to-one correspondence. The second RF PA Mid device 340 is also connected with the RF transceiver 10 and is configured to transmit/receive the RF signal in the second frequency band and the RF signal in the third frequency band. Specifically, the first RF PA Mid device 330 can transmit the RF signal in the first frequency band output by the RF transceiver 10 to any one RF LFEM device 20 through the second switch circuit 310, and after being processed by said any one RF LFEM device 20, the RF signal is transmitted out through an antenna connected with said any one RF LFEM device 20; or, the first RF PA Mid device 330 can directly transmit the RF signal in the first frequency band output by the RF transceiver 10 to the fourth antenna for transmission through the second switch circuit 310. Alternatively, the RF signal in the first frequency band received by the first antenna, the second antenna, or the third antenna and processed by the RF LFEM device 20 may be received through the second switch circuit 310; or the RF signal in the first frequency band received by the fourth antenna may be obtained by switching the second switch circuit 310 to conduct a path between the second switch circuit 310 and the fourth antenna, and the RF signal in the first frequency band is transmitted to the RF transceiver 10. The second RF PA Mid device 340 can transmit the RF signal in the second frequency band output by the RF transceiver 10 to any one RF LFEM device 20 through the second switch circuit 310, and after being processed by said any one RF LFEM device 20, the RF signal is transmitted out through an antenna connected with said any one RF LFEM device 20; the second RF PA Mid device 340 can directly transmit the RF signal in the second frequency band output by the RF transceiver 10 to the fourth antenna for transmission through the second switch circuit 310. Alternatively, the RF signal in the second frequency band received by the first antenna, the second antenna, or the third antenna and processed by the RF LFEM device 20 may be received through the second switch circuit 310; or the RF signal in the second frequency band received by the fourth antenna may be obtained by switching the second switch circuit 310 to conduct a path between the second switch circuit 310 and the fourth antenna, and the RF signal in the second frequency band is transmitted to the RF transceiver 10. The second RF PA Mid device 340 can also transmit the RF signal in the third frequency band output by the RF transceiver 10 to any RF LFEM device 20 through the second switch circuit 310, and after being processed by said any one RF LFEM device 20, the RF signal is transmitted out through an antenna connected with said any one RF LFEM device 20; or, the second RF PA Mid device 340 can directly transmit the RF signal in the third frequency band output by the RF transceiver 10 to the fourth antenna for transmission through the second switch circuit 310. Alternatively, the RF signal in the third frequency band received by the first antenna, the second antenna, or the third antenna and processed by the RF LFEM device 20 may also be received through the second switch circuit 310, or the RF signal in the second frequency band received by the fourth antenna may be obtained by switching the second switch circuit 310 to conduct a path between the second switch circuit 310 and the fourth antenna, and the RF signal in the third frequency band is transmitted to the RF transceiver 10.

In one implementation, the first RF PA Mid device 330 is further provided with an RF transmit port RFIN and an RF receive port RXOUT. The RF transmit port RFIN of the first RF PA Mid device 330 is connected with the RF transceiver 10 to receive the RF signal in the first frequency band output by the RF transceiver 10. The RF receive port RXOUT of the first RF PA Mid device 330 is connected with the RF transceiver 10 to output the received RF signal in the first frequency band to the RF transceiver 10. The first RF PA Mid device 330 is configured to transmit/receive the RF signal in the first frequency band.

The second RF PA Mid device 340 is further provided with an RF transmit port RFIN and an RF receive port RXOUT. The RF transmit port RFIN of the second RF PA Mid device 340 is connected with the RF transceiver 10 to receive the RF signal in the second frequency band and the RF signal in the third frequency band output by the RF transceiver 10. The RF receive port RXOUT of the second RF PA Mid device 340 is connected with the RF transceiver 10 to output the received RF signal in the second frequency band and RF signal in the third frequency band to the RF transceiver 10. The second RF PA Mid device 340 is configured to transmit/receive the RF signal in the first frequency band.

The RF transceiving system in the foregoing implementations can support 4*4 MIMO function and SRS function in 4-antenna 1T4R. Exemplarily, as illustrated in FIG. 5, working principles of 4*4 MIMO function for N77 are analyzed as follows.

### TX Channel:

A transmitted RF signal is output to the RF transmit port RFIN of the first RF PA Mid device 330 through a port TX1 HB2 of the RF transceiver 10, and reaches an SPDT RF switch after being amplified by a power amplifier PA. The RF signal is transmitted to a single-port through the SPDT RF switch, and reaches an RF antenna port AUX after being filtered by a filter. The RF signal reaches the second switch circuit 310 (an SP4T RF switch) via Path1, is transmitted to Path 2 through the second switch circuit 310, and is output through the second combiner 320 to the fourth antenna Ant4 to be transmitted out.

### PRX Channel:

A received RF signal enters the second combiner 320 from the fourth antenna Ant4, and reaches the second switch circuit 310 via path 2. The RF signal is transmitted to the single-port through the second switch circuit 310, reaches the RF antenna port AUX of the first RF PA Mid device 330 via Path1, and reaches the SPDT RF switch after being filtered by the filter. The RF signal is transmitted to a receive channel through the SPDT RF switch, reaches the RF receive port RXOUT after being amplified by a LNA, and enters the RF transceiver 10 via a port SDR PRX7.

### DRX Channel:

A received RF signal enters from the first antenna Ant1, reaches the antenna port ANT of the first RF LFEM device 20 via Path 6, and reaches a contact 2 through the first switch unit (an SP5T RF switch). The RF signal reaches the first receive port RX1 after passing through a first filter unit 211 and being amplified by a first LNA LNA1, and enters the RF transceiver 10 via a port SDR DRX7.

### PRX MIMO channel:

A received RF signal enters from the second antenna Ant2, reaches the antenna port ANT of the second RF LFEM device 20 via Path7, and reaches a contact 2 through the first switch unit (an SP5T RF switch). The RF signal reaches the first receive port RX1 after passing through a first filter unit 211 and being amplified by a first LNA LNA1, and enters the RF transceiver 10 via a port SDR PRX5.

### DRX MIMO Channel:

A received RF signal enters from the third antenna Ant3, reaches the antenna port ANT of the third RF LFEM device 20 via Path 8, and reaches the contact 2 through the first switch unit (an SP5T RF switch). The RF signal reaches the first receive port RX1 after passing through a first filter unit 211 and being amplified by a first LNA LNA1, and enters the RF transceiver 10 via a port SDR DRX5.

For example, as illustrated in FIG. 5, working principles of SRS function for N41 are analyzed as follows.

A transmitted RF signal is output to the RF transmit port RFIN of the first RF PA Mid device 330 via the port TX1 HB2 of the RF transceiver 10, and is transmitted to the SPDT RF switch after being amplified by the power amplifier PA. The RF signal is transmitted to the single-port via the SPDT RF switch, and reaches the RF antenna port AUX after being filtered by the filter. The RF signal reaches the second switch circuit 310 (the SP4T RF switch) via Path1, is transmitted to Path2 through the second switch circuit 310, and reaches the fourth antenna Ant4 through the second combiner 320 to be transmitted out.

The transmitted RF signal reaches the second switch circuit 310 via Path1, and is transmitted to Path3 through the second switch circuit 310. The RF signal reaches the first transmit/receive port TRX1 of the first RF LFEM device 20, is transmitted to a single-port via the first switch circuit 240, and is output to the first antenna Ant1 via Path6 to be transmitted out.

The transmitted RF signal reaches the second switch circuit 310 via Path1, and is transmitted to Path4 through the second switch circuit 310. The RF signal reaches the first transmit/receive port TRX1 of the second RF LFEM device 20, is transmitted to a single port via the first switch circuit 240, and is output to the second antenna Ant1 via Path7 to be transmitted out.

The transmitted RF signal reaches the second switch circuit 310 via Path1, and is transmitted to Path5 through the second switch circuit 310. The RF signal reaches the first transmit/receive port TRX1 of the third RF LFEM device 20, is transmitted to a single-port via the first switch circuit 240, and is output to the third antenna Ant3 via Path8 to be transmitted out.

The SRS function for N77 and the SRS function for N79 are similar to the SRS function for N41, and will not be repeated here. Specific SRS path configuration is illustrated in Table 1.

**Table 1, specific SRS path configuration in 1T4R**

| | N41 | N77 | N79 |
|---|---|---|---|
| Channel0 | Path1->Path2 | Path9 | Path9 |
| Channel1 | Path1->Path3->Path6 | Path10->Path6 | Path10->Path6 |
| Channel2 | Path1->Path4->Path7 | Path11->Path7 | Path11->Path7 |
| Channel3 | Path1->Path5->Path8 | Path12->Path8 | Path12->Path8 |

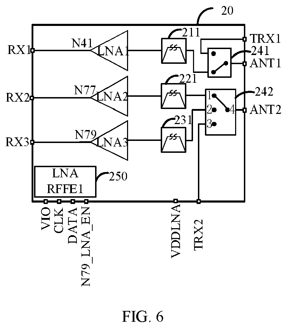

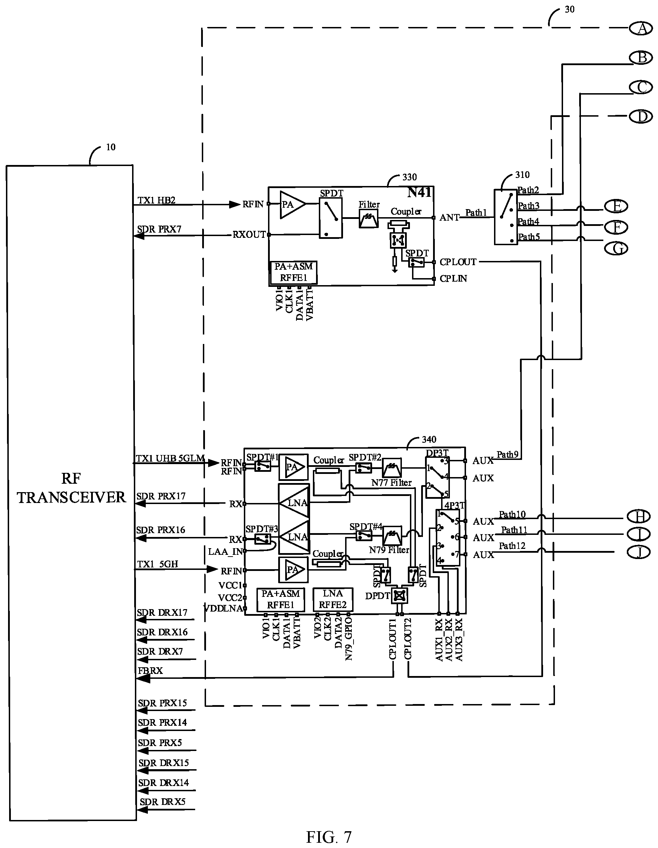

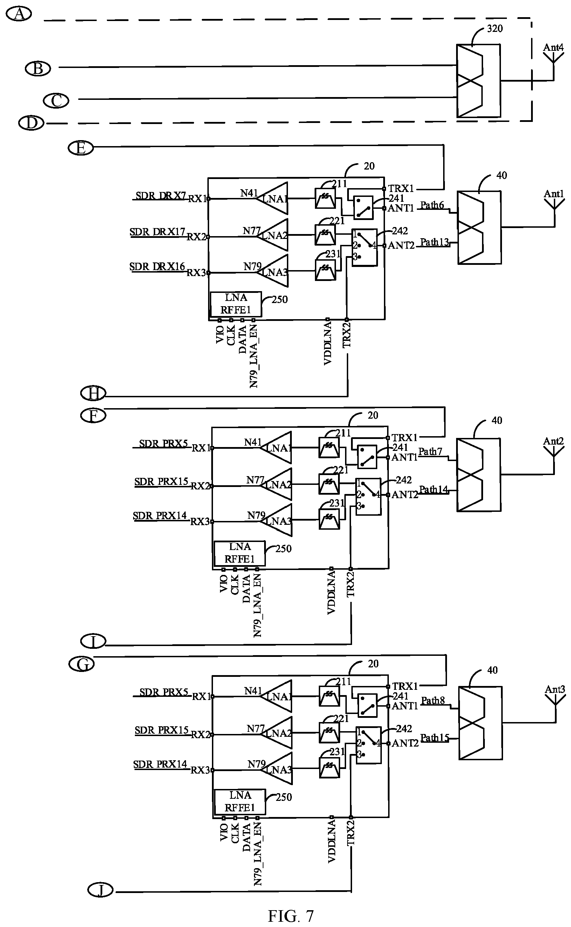

As illustrated in Figs. 6 and 7, in one implementation, each RF LFEM device 20 is provided with two antenna ports, such as a first antenna port ANT1 and a second antenna port ANT2. The RF transceiving system further includes three first combiners 40, and two antenna ports of each RF LFEM device 20 are connected with a first antenna, a second antenna, or a third antenna through one first combiner 40. Exemplarily, the three RF LFEM devices 20 are a first RF LFEM device 20, a second RF LFEM device 20, and a third RF LFEM device 20, respectively. The first antenna port ANT1 and the second antenna port of the first RF LFEM device 20 are connected with the first antenna via one first combiner 40; the first antenna port ANT1 and the second antenna port of the second RF LFEM device 20 are connected with the second antenna via another first combiner 40; and the first antenna port ANT1 and the second antenna port of the third RF LFEM device 20 are connected with the third antenna through yet another first combiner 40. The first switch circuit 240 of each RF LFEM device 20 includes a first RF switch 241 and a second RF switch 242. Two first ends of the first RF switch 241 are respectively connected with an input end of the first receive circuit 210 and the first receive port RX1, and a second end of the first RF switch 241 is connected with the first antenna port ANT1. Three first ends of the second RF switch 242 are connected with an input end of the second receive circuit 220, an input end of the third receive circuit 230, and a second receive port RX2 in a one-to-one correspondence, and a second end of the second RF switch 242 is connected with the second antenna port ANT2.

The RF transceiving system in the foregoing implementations can support 4*4 MIMO function and SRS function in 4-antenna 1T4R. Exemplarily, as illustrated in FIG. 7, working principles of 4*4MIMO function for N77 are analyzed as follows.

### TX Channel:

A transmitted RF signal is output to the RF transmit port RFIN of the second RF PA Mid device 340 through a port TX1 UHB SGLM of the RF transceiver 10, and reaches a power amplifier PA through an RF switch SPDT#1. The RF signal reaches an RF switch SPDT#2 after being amplified by the power amplifier PA, is transmitted to a single-port through the RF switch SPDT#2, and reaches a DP3T RF switch after being filtered by a filter. The RF signal is transmitted to Path 9 through the DP3T RF switch, and is output through the second combiner 320 to the fourth antenna Ant4 to be transmitted out.

### PRX Channel:

A received RF signal enters the second combiner 320 from the fourth antenna Ant4, and reaches the DP3T RF switch of the second RF PA mid device via Path9. The RF signal is transmited a contact 1 through the DP3T RF switch and reaches the RF switch SPDT#2 after being filtered by a filer. The RF signal is transmitted to a receive channel through the RF switch SPDT#2, reaches the RF receive port RXOUT after being amplified by a LNA, and enters the RF transceiver 10 via a port SDR PRX17.

### DRX Channel:

A received RF signal enters from the first antenna Ant1, reaches the antenna port ANT of the first RF LFEM device 20 via Path 6, and reaches a contact 3 through the first switch unit (an SP5T RF switch). The RF signal reaches the first receive port RX1 after passing through a first filter unit 211 and being amplified by a first LNA LNA1, and enters the RF transceiver 10 via a port SDR DRX17.

### PRX MIMO channel:

A received RF signal enters from the second antenna Ant2, reaches the antenna port ANT of the second RF LFEM device 20 via Path7, and reaches the contact 3 through the first switch unit (an SP5T RF switch). The RF signal reaches the first receive port RX1 after passing through a first filter unit 211 and being amplified by a first LNA LNA1, and enters the RF transceiver 10 via a port SDR PRX15.

### DRX MIMO Channel:

A received RF signal enters from the third antenna Ant3, reaches the antenna port ANT of the second RF LFEM device 20 via Path 8, and reaches a contact 2 through the first switch unit (an SP5T RF switch). The RF signal reaches the first receive port RX1 after passing through a first filter unit 211 and being amplified by a first LNA LNA1, and enters the RF transceiver 10 via a port SDR DRX15.

For example, as illustrated in FIG. 7, working principles of SRS function for N77 are analyzed as follows.

The transmitted RF signal is output to the RF transmit port RFIN of the second RF PA Mid device 340 through the port TX1 UHB SGLM of the RF transceiver 10, the RF signal is transmitted to the PA via the RF switch SPDT#1, and reaches the RF switch SPDT#2 after being amplified by the power amplifier (PA). The RF signal is transmitted to the single-port via the RF switch SPDT#2, and reaches the DP3T RF switch after being filtered by the filter. The RF signal is transmitted to Path9 through the DP3T RF switch, and is output to the fourth antenna Ant4 through the second combiner 320 to be transmitted out.

The DP3T RF switch is connected with the 3P4T RF switch through internal wirings, and the RF signal is transmit to Path10 through the 3P4T RF switch. The RF signal reaches the first transmit/receive port TRX1 of the first RF LFEM device 20, is transmitted to a single-port through the first switch circuit 240, and is output to the first antenna Ant1 via Path6 to be transmitted out.

The DP3T RF switch is connected with the 3P4T RF switch through internal wirings, and the RF signal is transmit to Path11 through the 3P4T RF switch. The RF signal reaches the first transmit/receive port TRX1 of the second RF LFEM device 20, is transmitted to a single-port through the first switch circuit 240, and is output to the second antenna Ant2 via Path7 to be transmitted out.

The DP3T RF switch is connected with the 4P3T RF switch through internal wirings, and the RF signal is transmit to Path12 through the 3P4T RF switch. The RF signal reaches the first transmit/receive port TRX1 of the third RF LFEM device 20, is transmitted to a single-port through the first switch circuit 240, and is output to the third antenna Ant3 via Path8 to be transmitted out.

The SRS function for N41 and the SRS function for N79 are similar to the SRS function for N77, and will not be repeated here. Specific SRS path configuration is illustrated in Table 2.

**Table 4, specific SRS path configuration in 1T4R**

| | N41 | N77 | N79 |
|---|---|---|---|
| Channel0 | Path1->Path2 | Path9 | Path9 |
| Channel1 | Path1->Path3->Path6 | Path10->Path6 | Path10->Path6 |
| Channel2 | Path1->Path4->Path7 | Path11->Path7 | Path11->Path7 |
| Channel3 | Path1->Path5->Path8 | Path12->Path8 | Path12->Path8 |

With reference to the RF transceiving systems as illustrated in FIGS. 5 and 7, reception of RF signals in three frequency bands is realized through the RF LFEM device 30, receive channels for the RF signals in the three frequency band are integrated and packaged into the same chip, so that a substrate area occupied by each device is saved, physical space is freed up for performance optimization of other modules, and costs are reduced. 4*4 MIMO function in the 1T4R mode can be achieved by the RF LFEM device 30 cooperating with the antenna group and transmission/reception selection module 30, and thus the system channel capacity is enhanced, and the accuracy and efficiency of channel estimation are improved. In the RF transceiving system as illustrated in FIG. 5, internal space of the RF LFEM device 20 can be further reduced, the costs can be reduced, and logic control inside the RF LFEM device 30 can be simplified. In the RF transceiving system as illustrated in FIG. 7, isolation between the RF signal in the first frequency band, the RF signal in the second frequency band, and the RF signal in the third frequency band is improved by disposing the first RF switch 241 and the second RF switch 242.

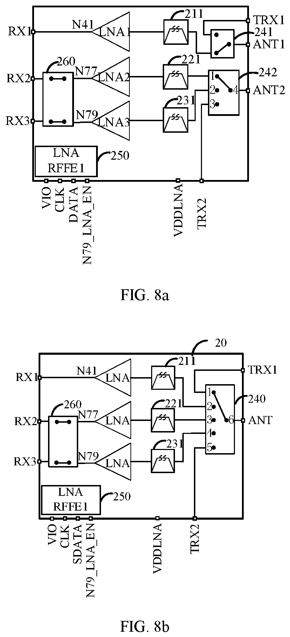

Referring to FIG. 8a and FIG. 8b, in an implementation, the RF LFEM device 20 further includes a third RF switch 260. Two first ends of the third RF switch 260 are respectively connected with the second receive port RX2 and the third receive port RX3, and two second ends of the third RF switch 260 are respectively connected with the output end of the second receive circuit 220 and the output end of the third receive circuit 230. The third RF switch 260 is configured to selectively conduct a receive channel for the RF signal in the second frequency band and a receive channel for the RF signal in the third frequency band.

Referring to FIGS. 5-8, in one implementation, the RF LFEM device 20 further includes a control module 250 which is connected with the first receive circuit 210, the second receive circuit 220, the third receive circuit 230, and the first switch circuit 240 respectively, is configured to adjust the gain coefficients of the first LNA and the second LNA to reduce link loss in the receive channel, and is also configured to control the first switch circuit 240 to selectively conduct a transmit/receive (transmit/receive) channel for the RF signal in the first frequency band, a transmit/receive channel for the RF signal in the second frequency band, or a transmit/receive channel for the RF signal in the third frequency band.

As illustrated in FIG. 9b, in one implementation, the RF LFEM device 20 may be understood as a packaged chip, and the first antenna port ANT1, the second antenna port ANT2, the first transmit/receive port TRX1, the second transmit/receive port TRX2, the first receive port RX1, the second receive port RX2, and the third receive port RX3 that are configured in the RF LFEM device 20 may be understood as RF pin terminals of the RF LFEM device 20 and are configured to connect external devices.

Specifically, the control module 250 may be a mobile industry processor interface (MIPI) - RF front end control interface (RFFE) control module or an RFFE control module that comply with the RFFE bus control protocol. If the first control module 250 is the MIPI-RFFE control unit or the RFFE control unit, the RF PA Mid with LNA (L-PA Mid) device is further provided with an input pin CLK for a clock signal, an input pin or bidirectional pin SDATAS for a single/dual-direction data signal, a power supply pin VDD, a reference voltage pin VIO, etc.

A communication device is further provided in implementations of the disclosure. The communication device is configured with the RF transceiving system described in any of the above implementations.

By configuring the RF transceiving system in the communication device, the integration of the RF transceiving system is improved, and the substrate area occupied by each device in the RF transceiving system is reduced. Additionally, power supply, logic control, and PCB layout and wiring of the RF LFEM device 2030 can be simplified, and thus costs are saved.

In the context of the disclosure, reference terms such as "some implementations", "other implementations", "preferred implementations" mean that a specific feature, structure, material, or characteristic described in combination with the implementation or example are included in at least one implementation or example of the disclosure. The phrase appearing in the disclosure does not necessarily refer to the same implementation or example.

Various technical features of the above-described implementations can be combined in any way. For simple illustration, not all possible combinations of the technical features in the above-described implementations have been described. However, as long as the combinations of these technical features do not conflict, the combinations should be considered within the scope of the disclosure.

Implementations described above are merely several implementing methods of the disclosure, and should not be understood as limitation on the scope of the disclosure although implementations above are described relatively specific and detailed. It should be noted that, for those skilled in the art, various modifications and improvements can be made within the concept of the disclosure, and these fall within the scope of protection of the disclosure. Therefore, the scope of protection of the disclosure should be determined by the appended claims.

## Claims

1. A radio frequency (RF) transceiving system, comprising:
an RF transceiver;
an antenna group, comprising at least a first antenna, a second antenna, a third antenna, and a fourth antenna, and configured for RF signal transmission/reception;
three RF low-noise-amplifier (LNA)-front-end-module (LFEM) devices, wherein each RF LFEM device is provided with a first transmit/receive port, a second transmit/receive port, at least one antenna port, and a first receive port, a second receive port, and a third receive port which are connected with the RF transceiver, and the three RF LFEM devices are configured to receive an RF signal in a first frequency band, an RF signal in a second frequency band, and an RF signal in a third frequency band; wherein antenna ports of the three RF LFEM devices are respectively connected with the first antenna, the second antenna, and the third antenna; and
a transmission/reception selection module, wherein the transmission/reception selection module is respectively connected with the first transmit/receive port and the second transmit/receive port of each RF LFEM device, and is connected with the first antenna, the second antenna, and the third antenna via each RF LFEM device, and the transmission/reception selection module is further connected with the RF transceiver and the fourth antenna; and the transmission/reception selection module is configured for transmission/reception selection of the RF signal in the first frequency band, the RF signal in the second frequency band, and the RF signal in the third frequency band.

2. The RF transceiving system according to claim 1, wherein each RF LFEM device comprises:
a first receive circuit, wherein the first receive circuit has an output end connected with the first receive port, and is configured to receive and amplify the RF signal in the first frequency band;
a second receive circuit, wherein the second receive circuit has an output end connected with the second receive port, and is configured to receive and amplify the RF signal in the second frequency band;
a third receive circuit, wherein the third receive circuit has an output end connected with the third receive port, and is configured to receive and amplify the RF signal in the third frequency band; and
a first switch circuit, wherein the first switch circuit comprises a plurality of first ends and at least one second end, the plurality of first ends of the first switch circuit are correspondingly connected with an input end of the first receive circuit, an input end of the second receive circuit, an input end of the third receive circuit, the first transmit/receive port, and the second transmit/receive port, and the at least one second end of the first switch circuit is connected with one antenna port.

3. The RF transceiving system according to claim 2, wherein each RF LFEM device is provided with two antenna ports, the RF transceiving system further comprises three first combiners, and the two antenna ports of each RF LFEM device are connected with the first antenna, the second antenna, or the third antenna via one first combiner; and the first switch circuit comprises:
a first RF switch, wherein two first ends of the first RF switch are respectively connected with the input end of the first receive circuit and the first receive port, and a second end of the first RF switch is connected with one antenna port; and
a second RF switch, wherein three first ends of the second RF switch are correspondingly connected with the input end of the second receive circuit, the input end of the third receive circuit, and the second receive port, and a second end of the second RF switch is connected with another antenna port.

4. The RF transceiving system according to claim 2 or 3, wherein the transmission/reception selection module comprises a second switch circuit, a second combiner, a first RF power amplifier module including duplexers (PA Mid) device, and a second RF PA mid device; wherein
the first RF PA Mid device is provided with one RF antenna port, and the second RF PA Mid device is provided with four RF antenna ports;
the second switch circuit comprises one first end and four second ends, and the first end of the second switch circuit is connected with the RF antenna port of the first RF PA Mid device, three second ends of the second switch circuit are correspondingly connected with first transmit/receive ports of the three RF LFEM devices, another second end of the second switch circuit is connected with the fourth antenna via the second combiner, and the second switch circuit is configured to selectively conduct an RF channel between the first RF PA Mid device and any of the first antenna, second antenna, third antenna, or fourth antenna;
the first RF PA Mid device is further connected with the RF transceiver and is configured to transmit/receive the RF signal in the first frequency band; and
three RF antenna ports of the second RF PA Mid device are correspondingly connected with second transmit/receive ports of the three RF LFEM devices, another RF antenna port of the second RF PA Mid device is connected with the fourth antenna via the second combiner, and the second RF PA Mid device is further connected with the RF transceiver, and is configured to transmit/receive the RF signal in the second frequency band and the RF signal in the third frequency band.

5. The RF transceiving system according to claim 4, wherein the RF LFEM device further comprises:
a third RF switch, wherein two first ends of the third RF switch are respectively connected with the second receive port and the third receive port, and two second ends of the third RF switch are respectively connected with an output end of the second receive circuit and an output end of the third receive circuit, and the third RF switch is configured to selectively conduct a receive channel for the RF signal in the second frequency band and a receive channel for the RF signal in the third frequency band.

6. The RF transceiving system according to claim 4, wherein the first RF PA Mid device and the second RF PA Mid device are each provided with an RF transmit port and an RF receive port;
the RF transmit port of the first RF PA Mid device is connected with the RF transceiver to receive the RF signal in the first frequency band output by the RF transceiver; the RF receive port of the first RF PA Mid device is connected with the RF transceiver to output the RF signal in the first frequency band received to the RF transceiver; and the first RF PA Mid device is configured to transmit/receive the RF signal in the first frequency band;
the RF transmit port of the second RF PA Mid device is connected with the RF transceiver to receive the RF signal in the second frequency band and the RF signal in the third frequency band output by the RF transceiver; the RF receive port of the second RF PA Mid device is connected with the RF transceiver to output the RF signal in the second frequency band received and the RF signal in the third frequency band received to the RF transceiver, and the first RF PA Mid device is configured to transmit/receive the RF signal in the first frequency band.

7. The RF transceiving system according to claim 2 or 3, wherein
the first receive circuit comprises a first LNA, an input end of the first LNA is connected with one first end of the first switch circuit, an output end of the first LNA is connected with the first receive port, and the first LNA is configured to amplify the RF signal in the first frequency band received;
the second receive circuit comprises a second LNA, an input end of the second LNA is connected with another first end of the first switch circuit, an output end of the second LNA is connected with the second receive port, and the second LNA is configured to amplify the RF signal in the second frequency band received;
the third receive circuit comprises a third LNA, an input end of the third LNA is connected with yet another first end of the first switch circuit, an output end of the third LNA is connected with the third receive port, and the third LNA is configured to amplify the RF received signal in the third frequency band received.

8. The RF transceiving system according to claim 7, wherein
the first receive circuit further comprises a first filter unit, wherein the first filter unit is disposed in a receive channel for the RF signal in the first frequency band and configured to filter the RF signal in the first frequency band received and output the RF signal in the first frequency band filtered to the first LNA;
the second receive circuit further comprises a second filter unit, wherein the second filter unit is disposed in a receive channel for the RF signal in the second frequency band and is configured to filter the RF signal in the second frequency band received and output the RF signal in the second frequency band filtered to the second LNA; and
the third receive circuit further comprises a third filter unit, wherein the third filter unit is disposed in a receive channel for the RF signal in the third frequency band and is configured to filter the RF signal in the third frequency band received and output the RF signal in the third frequency band filtered to the third LNA.

9. The RF ttransceiving system according to claim 2, wherein the RF LFEM device further comprises:
a control module respectively connected with the first receive circuit, the second receive circuit, the third receive circuit, and the first switch circuit, and configured to adjust a gain coefficient of the first LNA and a gain coefficient of the second LNA to reduce a link loss of a receive channel, and is further configured to control the first switch circuit to selectively conduct a transmit/receive channel for the RF signal in the first frequency band, a transmit/receive channel for the RF signal in the second frequency band, or a transmit/receive channel for the RF signal in the third frequency band .

10. The RF transceiving system according to claim 1, wherein the RF signal in the first frequency band is a 5G signal in frequency band N41, and the RF signal in the second frequency band and the RF signal in the third frequency band are respectively a 5G signal in frequency band N77 and a 5G signal in frequency band N79.

11. A communication device comprising a radio frequency (RF) transceiving system, wherein the RF transceiving system comprises:
an RF transceiver;
an antenna group, comprising at least a first antenna, a second antenna, a third antenna, and a fourth antenna, and configured for RF signal transmission/reception;
three RF low-noise-amplifier (LNA)-front-end-module (LFEM) devices, wherein each RF LFEM device is provided with a first transmit/receive port, a second transmit/receive port, at least one antenna port, and a first receive port, a second receive port, and a third receive port which are connected with the RF transceiver, and the three RF LFEM devices are configured to receive an RF signal in a first frequency band, an RF signal in a second frequency band, and an RF signal in a third frequency band; wherein antenna ports of the three RF LFEM devices are respectively connected with the first antenna, the second antenna, and the third antenna; and
a transmission/reception selection module, wherein the transmission/reception selection module is respectively connected with the first transmit/receive port and the second transmit/receive port of each RF LFEM device, and is connected with the first antenna, the second antenna, and the third antenna via each RF LFEM device, and the transmission/reception selection module is further connected with the RF transceiver and the fourth antenna; and the transmission/reception selection module is configured for transmission/reception selection of the RF signal in the first frequency band, the RF signal in the second frequency band, and the RF signal in the third frequency band.

12. The communication device according to claim 11, wherein each RF LFEM device comprises:
a first receive circuit, wherein the first receive circuit has an output end connected with the first receive port, and is configured to receive and amplify the RF signal in the first frequency band;
a second receive circuit, wherein the second receive circuit has an output end connected with the second receive port, and is configured to receive and amplify the RF signal in the second frequency band;
a third receive circuit, wherein the third receive circuit has an output end connected with the third receive port, and is configured to receive and amplify the RF signal in the third frequency band; and
a first switch circuit, wherein the first switch circuit comprises a plurality of first ends and at least one second end, the plurality of first ends of the first switch circuit are correspondingly connected with an input end of the first receive circuit, an input end of the second receive circuit, an input end of the third receive circuit, the first transmit/receive port, and the second transmit/receive port, and the at least one second end of the first switch circuit is connected with one antenna port.

13. The communication device according to claim 12, wherein each RF LFEM device is provided with two antenna ports, the RF transceiving system further comprises three first combiners, and the two antenna ports of each RF LFEM device are connected with the first antenna, the second antenna, or the third antenna via one first combiner; and the first switch circuit comprises:
a first RF switch, wherein two first ends of the first RF switch are respectively connected with the input end of the first receive circuit and the first receive port, and a second end of the first RF switch is connected with one antenna port; and
a second RF switch, wherein three first ends of the second RF switch are correspondingly connected with the input end of the second receive circuit, the input end of the third receive circuit, and the second receive port, and a second end of the second RF switch is connected with another antenna port.

14. The communication device according to claim 12 or 13, wherein the transmission/reception selection module comprises a second switch circuit, a second combiner, a first RF power amplifier module including duplexers (PA Mid) device, and a second RF PA mid device; wherein
the first RF PA Mid device is provided with one RF antenna port, and the second RF PA Mid device is provided with four RF antenna ports;
the second switch circuit comprises one first end and four second ends, and the first end of the second switch circuit is connected with the RF antenna port of the first RF PA Mid device, three second ends of the second switch circuit are correspondingly connected with first transmit/receive ports of the three RF LFEM devices, another second end of the second switch circuit is connected with the fourth antenna via the second combiner, and the second switch circuit is configured to selectively conduct an RF channel between the first RF PA Mid device and any of the first antenna, second antenna, third antenna, or fourth antenna;
the first RF PA Mid device is further connected with the RF transceiver and is configured to transmit/receive the RF signal in the first frequency band; and
three RF antenna ports of the second RF PA Mid device are correspondingly connected with second transmit/receive ports of the three RF LFEM devices, another RF antenna port of the second RF PA Mid device is connected with the fourth antenna via the second combiner, and the second RF PA Mid device is further connected with the RF transceiver, and is configured to transmit/receive the RF signal in the second frequency band and the RF signal in the third frequency band.

15. The communication device according to claim 14, wherein the RF LFEM device further comprises:
a third RF switch, wherein two first ends of the third RF switch are respectively connected with the second receive port and the third receive port, and two second ends of the third RF switch are respectively connected with an output end of the second receive circuit and an output end of the third receive circuit, and the third RF switch is configured to selectively conduct a receive channel for the RF signal in the second frequency band and a receive channel for the RF signal in the third frequency band.

16. The communication device according to claim 14, wherein the first RF PA Mid device and the second RF PA Mid device are each provided with an RF transmit port and an RF receive port;
the RF transmit port of the first RF PA Mid device is connected with the RF transceiver to receive the RF signal in the first frequency band output by the RF transceiver; the RF receive port of the first RF PA Mid device is connected with the RF transceiver to output the RF signal in the first frequency band received to the RF transceiver; and the first RF PA Mid device is configured to transmit/receive the RF signal in the first frequency band;
the RF transmit port of the second RF PA Mid device is connected with the RF transceiver to receive the RF signal in the second frequency band and the RF signal in the third frequency band output by the RF transceiver; the RF receive port of the second RF PA Mid device is connected with the RF transceiver to output the RF signal in the second frequency band received and the RF signal in the third frequency band received to the RF transceiver, and the first RF PA Mid device is configured to transmit/receive the RF signal in the first frequency band.

17. The communication device according to claim 12 or 13, wherein
the first receive circuit comprises a first LNA, an input end of the first LNA is connected with one first end of the first switch circuit, an output end of the first LNA is connected with the first receive port, and the first LNA is configured to amplify the RF signal in the first frequency band received;
the second receive circuit comprises a second LNA, an input end of the second LNA is connected with another first end of the first switch circuit, an output end of the second LNA is connected with the second receive port, and the second LNA is configured to amplify the RF signal in the second frequency band received;
the third receive circuit comprises a third LNA, an input end of the third LNA is connected with yet another first end of the first switch circuit, an output end of the third LNA is connected with the third receive port, and the third LNA is configured to amplify the RF signal in the third frequency band received.

18. The communication device according to claim 17, wherein
the first receive circuit further comprises a first filter unit, wherein the first filter unit is disposed in a receive channel for the RF signal in the first frequency band and is configured to filter the RF signal in the first frequency band received and output the RF signal in the first frequency band filtered to the first LNA;
the second receive circuit further comprises a second filter unit, wherein the second filter unit is disposed in a receive channel for the RF signal in the second frequency band and is configured to filter the RF signal in the second frequency band received and output the RF signal in the second frequency band filtered to the second LNA; and
the third receive circuit further comprises a third filter unit, wherein the third filter unit is disposed in a receive channel for the RF signal in the third frequency band and is configured to filter the RF signal in the third frequency band received and output the RF signal in the third frequency band filtered to the third LNA.

19. The communication device according to claim 12, wherein the RF LFEM device further comprises:
a control module respectively connected with the first receive circuit, the second receive circuit, the third receive circuit, and the first switch circuit, and configured to adjust a gain coefficient of the first LNA and a gain coefficient of the second LNA to reduce a link loss of a receive channel, and is further configured to control the first switch circuit to selectively conduct a transmit/receive channel for the RF signal in the first frequency band, a transmit/receive channel for the RF signal in the second frequency band, or a transmit/receive channel for the RF signal in the third frequency band .

20. The communication device according to claim 11, wherein the RF signal in the first frequency band is a 5G signal in frequency band N41, and the RF signal in the second frequency band and the RF signal in the third frequency band are respectively a 5G signal in frequency band N77 and a 5G signal in frequency band N79.
